Europäisches Patentamt

European Patent Office

Office européen des brevets

(11) Veröffentlichungsnummer: **0 017 707**
A1

## (12) EUROPÄISCHE PATENTANMELDUNG

(21) Anmeldenummer: **80100525.7**

(22) Anmeldetag: **02.02.80**

(51) Int. Cl.³: **H 04 B 7/02**, H 04 Q 7/04

(30) Priorität: **27.02.79 DE 2907611**

(43) Veröffentlichungstag der Anmeldung: **29.10.80**
**Patentblatt 80/22**

(84) Benannte Vertragsstaaten: **AT BE CH LU NL**

(71) Anmelder: **Licentia Patent-Verwaltungs-GmbH,
Theodor-Stern-Kai 1, D-6000 Frankfurt/Main 70 (DE)**

(72) Erfinder: **Bürk, Hans, Buchenweg 1,
D-7911 Untereichingen (DE)**
Erfinder: **Fendler, Peter, Dipl.-Ing.,
Johann-Miller-Strasse 14, D-7901 Ulm-Jungingen (DE)**

(74) Vertreter: **Schulze, Harald, Licentia
Patent-Verwaltungs-GmbH Theodor-Stern-Kai 1,
D-6000 Frankfurt/Main 70 (DE)**

(54) **Empfängerauswahlautomatik für Funkzentralen.**

㊼ Empfängerauswahlautomatik für Funkzentralen, bei denen Nachrichtensignale über mehrere, an verschiedenen Standorten aufgestellte Funkempfangsstellen gleichzeitig empfangen werden und über Postleitungen oder andere Nachrichtenwege mit 300 bis 3400 Hz Übertragungsfrequenzbereich an die Funkzentrale übertragen werden. Jedem Empfangsweg (E1...n) ist in der Funkzentrale eine Störbewertungsschaltung (Stb1...n) zugeordnet, welche die Nachrichtensignale innerhalb des übertragenen Bereichs von 300 bis 3400 Hz nach ihren Frequenzanteilen bewertet und in eine in geringem Masse vom Nutzsignal und in hohem Masse von den Störanteilen abhängige Gleichspannung wandelt. Die Gleichspannungen werden ständig verglichen (EWA) und steuern Schalter (S1...n) zur Durchschaltung des besten Empfangsweges an eine Abhörstelle (L).

Licentia Patent-Verwaltungs-GmbH    Ulm, 22.02.79
6000 Frankfurt (Main) 70            NE2-UL/Bl/sa   UL 78/101

**Empfängerauswahlautomatik für Funkzentralen**

Die Erfindung betrifft eine Anordnung nach dem Oberbegriff des Anspruchs 1.

Eine solche Empfängerauswahlautomatik für Funkzentralen ist aus der DE-OS 22 38 342 bekannt. Gemäß dieser Schrift wird in der Zentrale der Signal/Rauschabstand auf den einzelnen Empfangswegen ermittelt und die verschiedenen Wege miteinander verglichen. Die verschiedenen Funkempfangsanlagen müssen mit Dynamikreglern ausgestattet sein. Ferner sind in der Zentrale aufwendige Auswerteeinrichtungen erforderlich.

Der Erfindung liegt die Aufgabe zugrunde, eine übersichtliche und einfache Empfangsauswerteanlage zu schaffen.

Die Erfindung ist im Anspruch 1 beschrieben. Unter der zulässigen Annahme, daß die auf ihren Störinhalt zu prüfenden Nachrichtensignale auf verschiedenen Leitungen stets gleichen Nutzinhalt führen, wie dies nach dem Wesen von Gleichwellenfunkanlagen beim Empfang einer mobilen Sendestation über mehrere räumlich verteilte Empfangsstationen sichergestellt ist, ist bei vergleichender Auswertung ein

...

auf dem Empfangsweg, im Empfänger, oder auf der Leitung hinzugekommenes Störsignal als zusätzlicher Signalinhalt erkennbar und als Steuergröße verfügbar. Die Leistung des Störsignals, besonders das Empfangsrauschen, ist über der NF-Bandbreite etwa gleichmäßig verteilt. Das Nutzsignal hat seinen größeren Energieanteil im Bereich niedriger Frequenzen. Das gilt, wenn man eine NF-Bandbreite von ca. 3,4 kHz annimmt, auch noch für die spektrale Energieverteilung bei Datenmodems. Diese Tatsache nutzt die Erfindung, indem die Energieanteile aus dem Nutztonbereich in der Störbewertungsschaltung erheblich abgeschwächt werden.

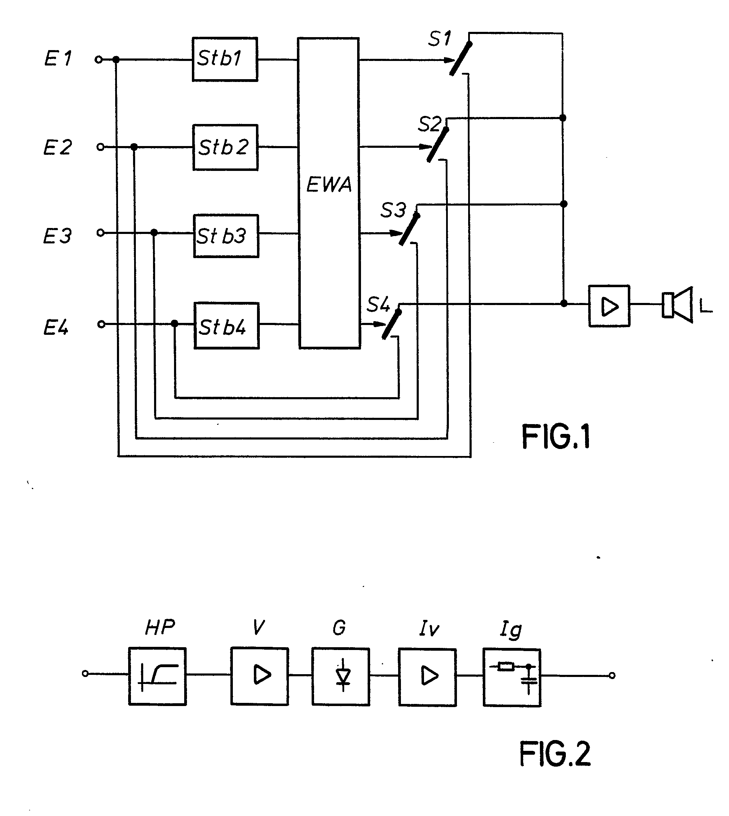

Die Störbewertungsschaltung hat in vorteilhafter Ausführungsform folgenden Aufbau (FIG. 2):

Mit einem Hochpaß (HP) werden aus dem ankommenden NF-Signal die Störanteile herausgefiltert. Der Hochpaß kann in bekannter Weise in LC-Schaltung oder als aktives Filter aufgebaut sein. Wegen der Bandpaßwirkung der NF-Leitungen darf die Grenzfrequenz des Hochpaßfilters nur etwa 3,5 kHz betragen. Die niedrigen Störspannungen werden verstärkt (V) und gleichgerichtet. Am Gleichrichter (G) liegt nun eine Spannung an, die den Störanteilen des NF-Signals proportional ist. Durch Invertierung (Iv) ergibt sich eine Spannung, die proportional der Güte des NF-Signals ist. Mit dem nachgeschalteten Integrierglied (Ig) wird die Gleichspannung geglättet.

Für eine schnelle, systemwertverbessernde Umschaltung der Empfangswege muß der Umschaltvorgang knackfrei erfolgen. Das setzt neben knackfreien Schaltern auch kohärentes Nutzsignal auf allen schaltbaren Leitungen voraus. Ohne kohärentes Nutzsignal kann die vergleichende Störbewertung nur über eine größere Integrationszeit erfolgen; damit ist eine sehr schnelle Umschaltung der Empfangswege nicht möglich.

...

In vorteilhafter Weiterbildung der Erfindung werden deshalb alle Empfangswege mit Laufzeitgliedern in Laufzeitnachbildungen so abgestimmt, daß ein weitgehend phasenkohärentes Nachrichtensignal vor allen Störbewertungsschaltungen ansteht. Außerdem wird am Integrierglied (Ig) eine kurze Integrierzeit eingestellt.

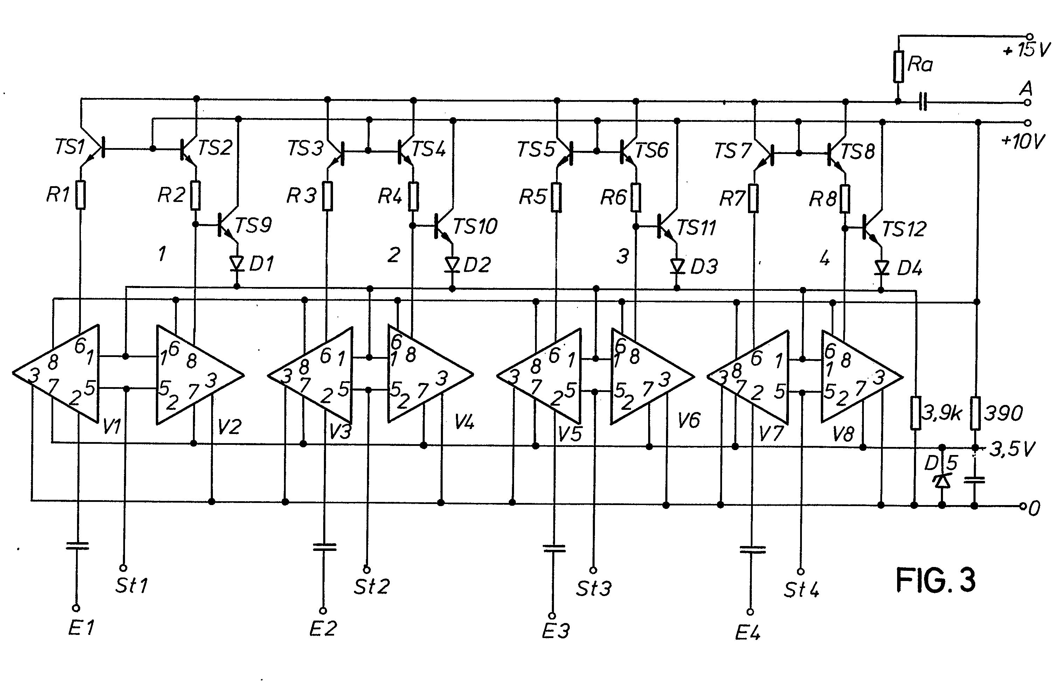

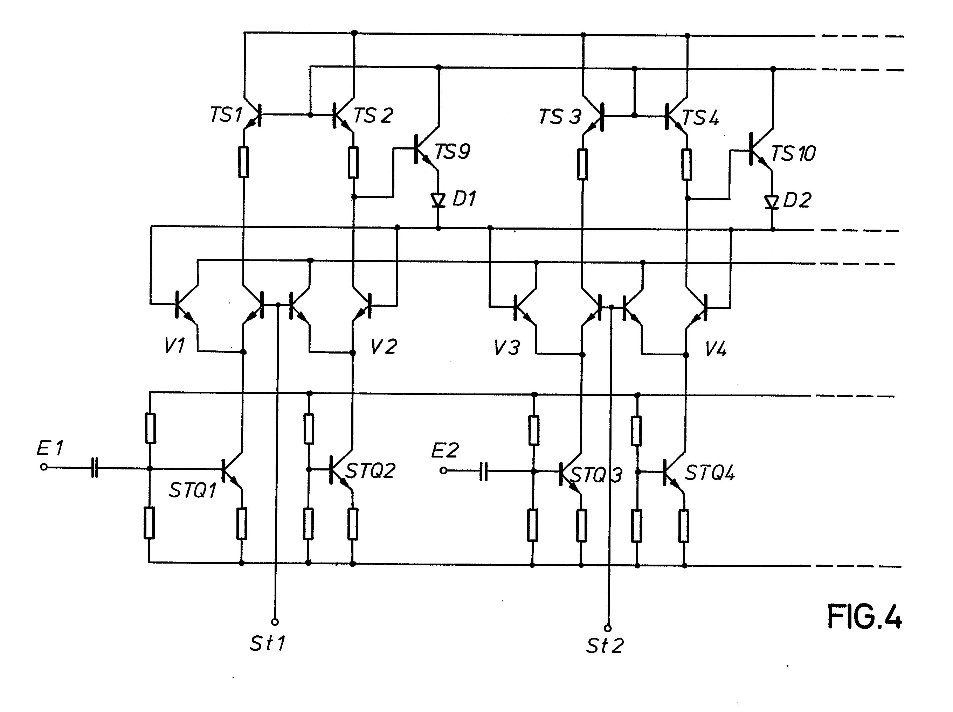

Die knackfreie Umschaltung der Empfangswege erfolgt in vorteilhafter Weise gemäß Anspruch 4. Die FIG. 3 zeigt eine mögliche Ausführung dieser Weiterbildung der Erfindung. Dargestellt ist eine Vergleichseinrichtung für vier Kanäle, die auch die Funktion der Schalter ausführt. FIG. 4 zeigt das Schaltbild gemäß FIG. 3 noch ausführlicher für zwei Kanäle. Die der Güte des NF-Signales proportionalen Steuerspannungen der Kanäle, im Beispiel St1 bis St4, die von den Störbewertungsschaltungen geliefert werden, werden je zwei Verstärkern, z. B. V1 und V2, zugeführt. Diese Verstärker sind Differenzverstärker (FIG. 4) und werden von der Minusseite je von einer Stromquelle, StQ1 ... STQ4, gespeist. Die Stromquelle des einen dieser beiden Verstärker wird mit dem Empfangssignal, E1 ... E4, des Kanales moduliert, von welchem in der Störbewertungsschaltung auch die Steuerspannung für diese beiden Verstärker gebildet wurde.

Der Verstärker V1, dessen Stromquelle moduliert wird, erhält am Eingang 5 die Steuerspannung St1, wodurch bei zunehmender Steuerspannung im invertierten Ausgang 6 sowie im Transistor Ts1 der Strom auch zunimmt. Der Verstärker V2, dessen Stromquelle nicht moduliert wird, erhält am Eingang 5 ebenfalls die Steuerspannung St1, wodurch bei zunehmender Steuerspannung im nicht invertierten Ausgang 8 sowie im Transistor Ts2 der Strom abnimmt.

Der Spannungsabfall am gemeinsamen Arbeitswiderstand Ra der Transistoren Ts1 bis Ts8 bleibt deshalb beim Verändern der

...

Steuerspannung stets gleich groß. Das der Stromquelle aufmodulierte Signal wird dagegen mit zunehmender Steuerspannung und mit zunehmendem Strom im Ausgang 6 des Verstärkers V1 über den Transistor Ts1 am Arbeitswiderstand R1 gleichermaßen größer.

Am nicht invertierten Ausgang 8 des Verstärkers V2 nimmt mit zunehmender Steuerspannung die Ausgangsspannung ebenfalls zu, da der Spannungsabfall am Widerstand R2 mit abnehmendem Strom geringer wird.

Über den Transistor Ts9 und die Diode D1 wird nun die Schwellspannung für die Eingänge 1 aller Verstärker angehoben. Auf diese Weise ist für alle weiteren Kanäle ein Schwellwert vorgegeben, der erst beim Auftreten eines besseren Empfangssignales, als auf Kanal 1 anliegend, eine Kanalablösung ermöglicht.

Wenn während der Empfangszeit über einen Kanal dessen Empfangsqualität schwindet, so erniedrigt sich verzögerungsfrei auch die Schwellspannung und ein anderer Kanal, der besser als der schwindende Kanal einfällt, kann aufgeschaltet werden. Der Übergang von einem Kanal auf den anderen erfolgt am Ausgangssignal unmerklich, da mit dem sich vermindernden des einen und dem sich erhöhenden Strom des anderen Kanalverstärkers dort jeweils auch die NF-Ausgangsspannung kontinuierlich an- und abschwillt. Die NF-Ausgangsspannung am Punkt A bleibt dabei ständig gleich groß, vorausgesetzt natürlich, daß die einzelnen Empfangskanäle gleich gepegelt sind.
Mit einer solchen Anordnung kann eine systemverbessernde Umschaltung der besten Empfangswege erfolgen, die die Qualität einer schnellen Diversity erreicht.

- 5 -

Licentia Patent-Verwaltungs-GmbH    NE2-UL/Bl/sa   10.12.79
Theodor-Stern-Kai 1                 UL 78/101
D-6000 Frankfurt 70                 AZ.: P 29 07 611.7

                                    Auslandsfassung

Patentansprüche

1. Anordnung für eine Funkzentrale zur Auswahl des besten Empfangsweges von Nachrichtensignalen mindestens einer beweglichen Funksprechstelle, die über mehrere, an verschiedenen Standorten aufgestellte Funkempfangsstellen gleichzeitig empfangen werden und die gemeinsam mit den in den Funkempfängern bei kleinen Empfangsspannungen entstehenden Störgeräusche über Postleitungen oder andere Nachrichtenwege mit 300 bis 3000 Hz bzw. 300 bis 3400 Hz Übertragungsfrequenzbereich zur Funkzentrale geleitet werden, wo nach Prüfung der Nachrichtensignale der Empfangsweg mit den geringsten Störanteilen zu einer Abhörstelle durchgeschaltet wird, dadurch gekennzeichnet, daß jedem Empfangsweg (E1 ... n) an zentraler Stelle eine Störbewertungsschaltung (Stb1 ... n) zugeordnet ist, welche die Nachrichtensignale nach ihren Frequenzanteilen bewertet und in eine in geringem Maße vom Nutzsignal und in hohem Maße von den Störanteilen abhängige Gleichspannung wandelt, daß in einer den Störbewertungsschaltungen nachgeschalteten Vergleichseinrichtung (EWA) die erzeugten Gleichspannungen aller Empfangswege ständig verglichen werden, und daß mit diesen Gleichspannungen Schalter (S1 ... n) angesteuert werden, die den Empfangsweg mit den geringsten Störanteilen an die Abhörstelle (L) durchschalten (FIG. 1).

                                                        ...

2. Anordnung nach Anspruch 1, dadurch gekennzeichnet, daß die Störbewertungsschaltung aus einer oder mehreren als Hochpaß wirksamen Differenzierschaltungen (HP) besteht, deren Ausgang einem Verstärker (V) zugeführt ist, dessen Ausgang einem Gleichrichter (G) zugeführt ist, an welchen sich ein Invertierglied (Iv) anschließt, dessen Ausgang wiederum einem Integrierglied (Ig) zugeführt ist (FIG. 2).

3. Anordnung nach Anspruch 1 und 2, dadurch gekennzeichnet, daß alle Empfangswege mit Laufzeitgliedern in Laufzeitnachbildungen so abgestimmt sind, daß ein weitgehend phasenkohärentes Nachrichtensignal vor allen Störbewertungsschaltungen ansteht, und daß am Integrierglied (Ig) der Störbewertungsschaltungen eine kurze Integrierzeit eingestellt ist.

4. Anordnung nach einem der Ansprüche 1 bis 3, dadurch gekennzeichnet, daß die von den Störanteilen abhängigen Gleichspannungen (St1 ... n) in der Vergleichseinrichtung (EWA) benutzt werden, um für jeden Kanal vorhandene Vergleichseinrichtungsverstärker in ihrer Linearverstärkung verzögerungsfrei so zu steuern, daß die zusammengeführten Ausgangssignale aller Verstärker am Ausgangspunkt (A) der Vergleichseinrichtung stets ein gleich großes NF-Signal bilden, das bei Eingangssignalen mit ungleichen Störanteilen dem Eingangssignal mit den geringsten Störanteilen entspricht (FIG. 3).

FIG.1

FIG.2

FIG. 3

0017707

FIG.4

3/3

0017707

## Europäisches Patentamt
## EUROPÄISCHER RECHERCHENBERICHT

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| X | DE - A1 - 2 634 240 (MOTOROLA)<br>+ Fig. 1,5; Seite 9, Zeile 10 bis Seite 10, Zeile 18; Seite 20, Zeilen 16-31; Seite 24, Zeile 28 bis Seite 26, Zeile 25; Seite 27, Zeilen 11-25 +<br>-- | 1 | H 04 B 7/02<br>H 04 Q 7/04 |
| D | DE - A1 - 2 238 342 (TEKADE FELTEN & GUILLEAUME FERNMELDEAN-LAGEN)<br>+ Seite 2, Zeile 26 bis Seite 3, Zeile 6; Anspruch 1 +<br>-- | 1 | |
| | DE - B2 - 2 614 918 (LICENTIA)<br>+ Anspruch 1; Spalte 9, Zeilen 44-58 +<br>-- | 1,3 | RECHERCHIERTE SACHGEBIETE (Int. Cl. ³)<br><br>H 04 B 7/00<br>H 04 Q 7/00 |
| | DE - A - 2 314 630 (SIEMENS AG)<br>+ Seite 1, Zeilen 22-27; Anspruch 1 +<br>---- | 1,4 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 07-05-1980 | DRÖSCHER |

EPA form 1503.1  06.78